# EUROPÄISCHE PATENTSCHRIFT

(11) **EP 0 612 083 B1**
(45) Veröffentlichungstag und Bekanntmachung des Hinweises auf die Patenterteilung: **27.03.1996**
(21) Anmeldenummer: 94101402.9
(22) Anmeldetag: 31.01.1994
(51) Int. Cl.: H01F 1/34, C04B 35/26

(54) **Mangan/Zink-Ferrit**
Manganese-zinc ferrite
Ferrite de manganèse-zinc

(30) Priorität: 17.02.1993 DE 4304843
(43) Veröffentlichungstag der Anmeldung: 24.08.1994
(73) Patentinhaber: SIEMENS MATSUSHITA COMPONENTS GmbH & CO KG, D-81617 München (DE)
(72) Erfinder: Schostek, Siegmund, Dipl.-Ing., D-85617 Assling (DE); Beer, August, Dr. Dipl.-Phys., D-82041 Deisenhofen (DE)
(74) Vertreter: Fuchs, Franz-Josef, Dr.-Ing.

(56) Entgegenhaltungen:
- EP-A- 0 445 965
- PATENT ABSTRACTS OF JAPAN vol. 16, no. 431 (C-0983) 9. September 1992 & JP-A-04 149 026 (KAWASAKI STEEL CORP,) 22. Mai 1992
- PATENT ABSTRACTS OF JAPAN vol. 5, no. 78 (E-058) 22. Mai 1981 & JP-A-56 026 413 (TDK CORP) 14. März 1981
- PATENT ABSTRACTS OF JAPAN vol. 8, no. 139 (E-253) (1576) 28. Juni 1984 & JP-A-59 048 902 (NIHON FERRITE KK) 21. März 1984

## Beschreibung

Die vorliegende Erfindung betrifft Mangan/Zink-Ferrite nach dem Oberbegriff des Patentanspruchs 1.

Ferrite sind keine idealen Isolatoren. Daher treten beim Betreiben von induktiven elektrischen Bauelementen mit Magnetkernen aus Ferrit insbesondere bei hohen Frequenzen ins Gewicht fallende Kernverlustleistungen - etwa Hysterese- und Wirbelstromverluste - auf.

Beispielsweise ist es bei Ubertragern bzw. Transformatoren etwa für Schaltnetzteile von Fernsehgeräten wünschenswert, zu einem Betrieb mit höheren Frequenzen überzugehen, da dann höhere elektrische Leistungen übertragen bzw. bei gleicher übertragbarer elektrischer Leistung die Übertrager bzw. Transformatoren verkleinert werden können. Dabei steigen jedoch die elektrischen Verluste an.

Es ist bereits vorgeschlagen worden, durch bestimmte Dotierungen die elektrischen Verluste von Ferriten zu senken. So ist beispielsweise in der älteren deutschen Patentanmeldung P 41 36 534.8 vorgeschlagen worden, die elektrischen Verluste durch Dotierung mit Kalziumverbindungen zu verringern.

Der Erfindung zugrunde liegende Untersuchungen haben jedoch gezeigt, daß es zur Realisierung besonders verlustarmer Ferrite nicht ausreicht, nur einzelne Dotierungskomponenten ins Auge zu fassen.

Aus der JP-A-4-149 026 ist ein verlustarmer Ferrit bekannt mit 51.5-54.5 mol % Fe₂O₃, 33-40 mol % MnO, 6-13 mol % ZnO, wobei dieses Ferrit Pulver im gemisch mit einem Pulver aus 0,008-0.035 gew % SiO₂, 0,02-0,2 gew % CaO, 0,005-0,05 gew % Nb₂O₅, 0,005-0,5 gew % TaO₂ und 0,005-0,65 gew % TiO₂ verwendet wird.

Der vorliegenden Erfindung liegt daher die Aufgabe zugrunde, bereits vorgeschlagene Einzelmaßnahmen zur Verminderung der elektrischen Verlustleistung von Ferriten umfassend so weiterzubilden, daß sich sehr verlustarme Ferrite realisieren lassen.

Diese Aufgabe wird bei Mangan/Zink-Ferriten (MnZn-Ferrite) durch Zusammensetzung der Komponenten gemäß dem kennzeichnenden Teils des Patentanspruchs 1 gelöst.

Eine Weiterbildung der Erfindung ist Gegenstand eines Unteranspruchs.

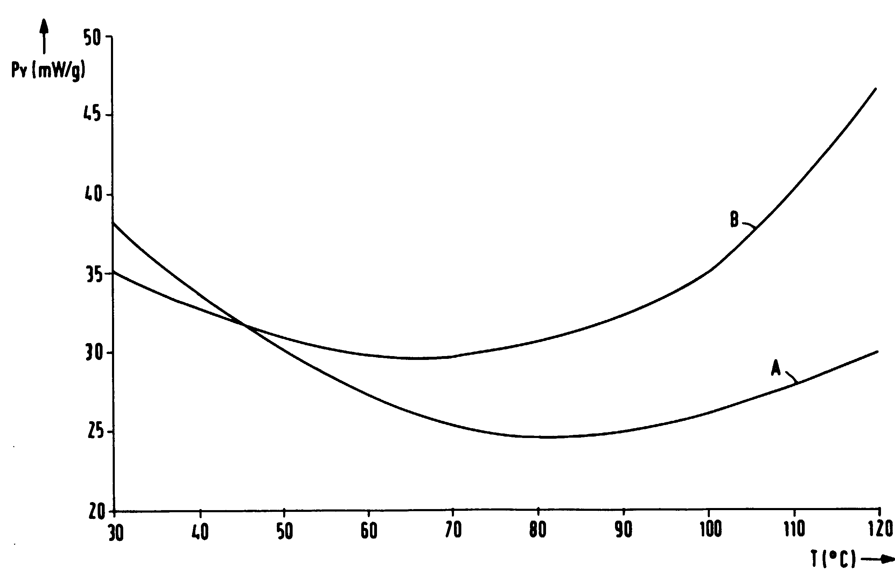

Die Erfindung wird im folgenden anhand von Ausführungsbeispielen und einem Diagramm gemäß der einzigen Figur der Zeichnung näher erläutert.

Die Figur der Zeichnung zeigt ein Diagramm der spezifischen Wattverluste eines Mangan/Zink-Ferrits (MnZn-Ferrit) als Funktion der Temperatur im Vergleich eines bekannten Ferrits mit einem erfindungsgemäßen Ferrit.

Erfindungsgemäß sind für Mangan/Zink-Ferrite Zusammensetzungen gemäß der folgenden Tabelle 1 vorgesehen:

**Tabelle 1**

| | |
|---|---|
| 53,0 bis 55,0 Mol% | Eisenoxid (Fe₂O₃₎ |
| 35,0 bis 41,0 Mol% | Manganoxid (MnO) |
| 7,0 bis 13,0 Mol% | Zinkoxid (ZnO) |
| | |
| 0,03 bis 0,12 Gew% | Kalziumoxid (CaO) |
| 0,01 bis 0,1 Gew% | Vanadinoxid (V₂O₅₎ |
| 0,1 bis 1,0 Gew% | Titanoxid (TiO₂₎ |
| 0,005 bis 0,015 Gew% | Siliziumoxid (SiO₂₎ |
| 0,01 bis 0,05 Gew% | Nioboxid (Nb₂O₅₎ |

Besonders günstige Verhältnisse ergeben sich, wenn eine Zusammensetzung gemäß der folgenden Tabelle 2 gewählt wird.

**Tabelle 2**

| | |
|---|---|
| 54,26 Mol% | Eisenoxid Fe₂O₃ |
| 38,37 Mol% | Manganoxid MnO |
| 7,3 Mol% | Zinkoxid ZnO |
| | |
| 0,086 Gew% | Kalziumoxid CaO |
| 0,23 Gew% | Titanoxid TiO₂ |
| 0,009 Gew% | Siliziumoxid SiO₂ |
| 0,03 Gew% | Nioboxid (Nb₂O₅₎ |

Mit der Zusammenfassung nach Tabelle 2 konnten die spezifischen Wattverluste Pᵥ in mW/g als Funktion der Temperatur T auf sehr kleine Werte verringert werden. So ergeben sich beispielsweise bei einem Betrieb mit 500 kHz, einer magnetischen Induktion von 50 mT (Millitessla) in einem Temperturbereich bis zu 100° C spezifische Wattverluste von lediglich 20 bis 25 mW/g.

Die Dotierungsstoffe Kalziumoxid (CaO), Vanadinoxid (V₂O₅), Titanoxid (TiO₂), Siliziumoxid (SiO₂) und Nioboxid (Nb₂O₅) haben die folgende Bedeutung:

Kalziumoxid lagert sich an den Korngrenzen des polykristallinen Ferrits an und erhöht dadurch zusammen mit Siliziumoxid den spezifischen Widerstand, wodurch Wirbelstromverluste verringert werden. Eine Erhöhung von Kalziumoxid und Siliziumoxid über die oben angegebenen Grenzen führt zu einer Grobkornbildung und damit zu einer Erhöhung der Kernverluste.

Vanadinoxid bewirkt neben einer deutlichen Erhöhung des spezifischen Widerstandes und damit einer entsprechenden Verringerung der Wirbelstromverluste auch zu einer Erhöhung der Bruchzähigkeit bzw. einer Verringerung der Sprödigkeit. Einzelheiten dazu sind der älteren deutschen Patentanmeldung P 41 36 535.6 zu entnehmen. Auch hierbei führt eine Erhöhung des Vanadinoxid-Anteils über die oben angegebenen Grenzen hinaus zu grobkristallinen Phasen und damit zu einer Verschlechterung der Eigenschaften des Ferrits.

Nioboxid und Titanoxid werden im Spinell-Gitter des Ferrits eingebaut und behindern den Elektronenaustausch zwischen zwei- und dreiwertigen Eisenionen und erhöhen damit ebenfalls den spezifischen Widerstand. Auch dabei führt eine Erhöhung des Anteils dieser Dotierungsstoffe über die oben angegebenen Grenzen hinaus zu einer Erhöhung der Verlustwerte bei gleichzeitigem Abfall der Induktivität.

Die erfindungsgemäß erziehlbaren günstigen Eigenschaften von MnZn-Ferriten sind aus dem Diagramm nach der Figur der Zeichnung ersichtlich, in dem die spezifischen Wattverluste Pᵥ in mW/g als Funktion der Temperatur T in °C aufgetragen sind. Eine Kurve A zeigt die gemäß der Erfindung deutlich verbesserten Eigenschaften gegenüber einem bisher bekannten Ferrit. Wesentlich sind dabei die bei hohen Temperaturen im Bereich von 80 bis 100° C erreichten niedrigen Verlustwerte, da die Betriebstemperaturen von Übertragern bzw. Transformatoren der eingangs genannten Art ebenfalls in diesem Bereich liegen.

## Patentansprüche

1. Mangan/Zink-Ferrit als Kernmaterial von induktiven Bauelementen für Hochfrequenzanwendungen, **gekennzeichnet durch** die Zusammensetzung
| | |
|---|---|
| 53,0 bis 55,0 Mol% | Eisenoxid (Fe₂O₃₎ |
| 35,0 bis 41,0 Mol% | Manganoxid (MnO) |
| 7,0 bis 13,0 Mol% | Zinkoxid (ZnO) |
| | |
| 0,03 bis 0,12 Gew% | Kalziumoxid (CaO) |
| 0,01 bis 0,1 Gew% | Vanadinoxid (V₂O₅₎ |
| 0,1 bis 1,0 Gew% | Titanoxid (TiO₂₎ |
| 0,005 bis 0,015 Gew% | Siliziumoxid (SiO₂₎ |
| 0,01 bis 0,05 Gew% | Nioboxid (Nb₂O₅₎ |

2. Mangan/Zink-Ferrit nach Anspruch 1, **gekennzeichnet durch** die Zusammensetzung
| | |
|---|---|
| 54,26 Mol% | Eisenoxid Fe₂O₃ |
| 38,37 Mol% | Manganoxid MnO |
| 7,3 Mol% | Zinkoxid ZnO |
| | |
| 0,086 Gew% | Kalziumoxid CaO |
| 0,23 Gew% | Titanoxid TiO₂ |
| 0,009 Gew% | Siliziumoxid SiO₂ |
| 0,03 Gew% | Nioboxid (Nb₂O₅₎ |

## Claims

1. Manganese-zinc ferrite as core material of inductive components for highfrequency applications, characterized by the composition
| | |
|---|---|
| 53.0 to 55.0 mol % | iron oxide (Fe₂O₃) |
| 35.0 to 41.0 mol % | manganese oxide (MnO) |
| 7.0 to 13.0 mol % | zinc oxide (ZnO) |
| | |
| 0.03 to 0.12 % by wt. | calcium oxide (CaO) |
| 0.01 to 0.1 % by wt. | vanadium oxide (V₂O₅) |
| 0.1 to 1.0 % by wt. | titanium oxide (TiO₂) |
| 0.005 to 0.015 % by wt. | silicon oxide (SiO₂) |
| 0.001 to 0.05 % by wt. | niobium oxide (Nb₂O₅) |

2. Manganese-zinc ferrite according to Claim 1, characterized by the composition
| | |
|---|---|
| 54.26 mol % | iron oxide FE₂O₃ |
| 38.37 mol % | manganese oxide MnO |
| 7.3 mol % | zinc oxide ZnO |
| | |
| 0.086 % by wt. | calcium oxide CaO |
| 0.23 % by wt. | titanium oxide TiO₂ |
| 0.009 % by wt. | silicon oxide SiO₂ |
| 0.03 % by wt. | niobium oxide (Nb₂O₅) |

## Revendications

1. Ferrite de manganèse-zinc servant de matériau de noyau d'éléments inductifs pour des utilisations hautes fréquences, caractérisée par la composition
| | |
|---|---|
| 53,0 à 55,0 % en mole | Oxyde de fer (Fe₂O₃) |
| 35,0 à 41,0 % en mole | Oxyde de manganèse (MnO) |
| 7,0 à 13,0 % en mole | Oxyde de zinc (ZnO) |
| | |
| 0,03 à 0,12 % en mole | Oxyde de calcium (CaO) |
| 0,01 à 0,1 % en mole | Oxyde de vanadium (V₂O₅) |
| 0,1 à 1,0 % en mole | Oxyde de titane (TiO₂) |
| 0,005 à 0,015 % en mole | Oxyde de silicium (SiO₂) |
| 0,01 à 0,05 % en mole | Oxyde de niobium (Nb₂O₅) |

2. Ferrite de manganèse-zinc suivant la revendication 1, caractérisée par la composition
| | |
|---|---|
| 54,26 % en mole | Oxyde de fer (Fe₂O₃) |
| 38,37 % en mole | Oxyde de manganèse (MnO) |
| 7,3 % en mole | Oxyde de zinc (ZnO) |
| | |
| 0,086 % en mole | Oxyde de calcium (CaO) |
| 0,23 % en mole | Oxyde de titane (TiO₂) |
| 0,009 % en mole | Oxyde de silicium (SiO₂) |
| 0,03 % en mole | Oxyde de niobium (Nb₂O₅) |
